# EUROPÄISCHE PATENTSCHRIFT

(11) **EP 0 695 470 B1**
(45) Veröffentlichungstag und Bekanntmachung des Hinweises auf die Patenterteilung: **12.03.1997**
(21) Anmeldenummer: 94914324.2
(22) Anmeldetag: 19.04.1994
(51) Int. Cl.: H02B 1/36, H02B 1/20

(54) **NIEDERSPANNUNGS-SCHALTANLAGE MIT EINER VERTEILUNGSBAUGRUPPE FÜR MEHRERE GERÄTETRÄGER**
LOW VOLTAGE SWITCHGEAR ASSEMBLY WITH A DISTRIBUTION SET FOR SEVERAL APPARATUS RACKS
INSTALLATION DE DISTRIBUTION ELECTRIQUE BASSE TENSION AVEC UN ENSEMBLE DE DISTRIBUTION POUR PLUSIEURS SUPPORTS D'APPAREILS

(30) Priorität: 21.04.1993 DE 4313653
(43) Veröffentlichungstag der Anmeldung: 07.02.1996
(73) Patentinhaber: SIEMENS AKTIENGESELLSCHAFT, 80333 München (DE)
(72) Erfinder: RÖSSLER, Heinz, D-63477 Maintal (DE); MAYER, Stefan, D-60598 Frankfurt (DE)
(86) Internationale Anmeldenummer: DE9400518
(87) Internationale Veröffentlichungsnummer: WO9424740

(56) Entgegenhaltungen:
- DE-A- 3 243 063
- DE-A- 3 709 227

## Beschreibung

Die Erfindung betrifft eine Niederspannungs-Schaltanlage mit Einschubfächern für einschiebbare Geräteträger, mit folgenden Merkmalen:
- ein Gerüst mit Feldsammelschienen und mit einem - bei frontseitiger Betrachtung - rechts gelegenen, abgehende Kabel und Leitungen aufnehmenden Raum,
- zur Bildung der Einschubfächer in dem Gerüst abgestützte Fachböden,
- Verteilungsbaugruppen zur Verbindung der Feldsammelschienen mit wenigstens zwei nebeneinander in einem Einschubfach einzusetzenden Geräteträgern und zur Verbindung der Geräteträger mit den abgehenden Kabeln und Leitungen,
- ein jeder Verteilungsbaugruppe zugeordnetes Gehäuse weist in dem Gehäuse gegeneinander isoliert abgestützte Verteilungsschienen und ortsfeste Haupttrennkontakte sowie ortsfeste Hilfstrennkontakte auf, ferner Verbindungsleiter zur Verbindung der Haupttrennkontakte und/oder der Hilfstrennkontakte mit Anschlußklemmen.

Eine Niederspannungs-Schaltanlage mit diesen Merkmalen ist durch die EP-A-0 109 568 bzw. die DE-A-32 43 063 bekannt geworden. Die Verteilungsbaugruppen sind dabei winkelförmig oder U-förmig ausgebildet und bedecken mit ihren Schenkeln die Rückseite und die eine bzw. beide Seitenwände eines Einschubfaches. Die Verteilungsbaugruppe besteht aus Hohlkörpern, in denen Stromschienen und Trennkontakte geschützt und berührungssicher angeordnet sind. Die Kontaktierung erfolgt rückseitig in der Einschubrichtung der Geräteträger.

Durch die Erfindung soll eine Verteilungsbaugruppe für solche Geräteträger geschaffen werden, deren Trennkontakte bei ruhendem Geräteträger in einer quer zur Bewegungsrichtung des Geräteträgers beim Einsetzen in ein Einschubfach verlaufenden Richtung betätigt werden.

Die Erfindung löst diese Aufgabe ausgehend von einer Niederspannungs-Schaltanlage der eingangs beschriebenen Art durch folgende Merkmale:
- die Feldsammelschienen sind in einem an der linken Seite des Gerüstes gelegenen gerüsthohen Raum in der Tiefenerstreckung des Gerüstes hintereinanderliegend angeordnet,
- das Gehäuse der Verteilungsbaugruppe ist etwa entsprechend der Grundfläche der Fachböden bemessen,
- die Verteilungsschienen sind in der Tiefenerstreckung des Gerüstes hintereinanderliegend angeordnet,
- an der den Feldsammelschienen zugewandten Seite der Verteilungsbaugruppe sind die Verteilungsschienen mit aus dem Gehäuse herausragenden Kontaktenden versehen,
- die Kontaktenden besitzen mit den Feldsammelschienen zusammenwirkende Kontaktflächen und
- die Anschlußklemmen für die zu den Verbrauchern führenden Kabel und Leitungen sind an der den Kontaktenden der Verteilungsschienen gegenüberliegenden Seite der Verteilungsbaugruppe ortsfest im Gerüst angeordnet.

Hierdurch wird erreicht, daß die Verteilungsbaugruppe ein im wesentlichen ebenes Bauteil ist. Diese Eigenschaft führt zu Vorteilen sowohl bei der Herstellung als auch bei der Montage der Verteilungsbaugruppe, die sich in geringeren Kosten und kürzerem Zeitbedarf bei der Ausrüstung oder Umrüstung einer Niederspannungs-Schaltanlage auf nebeneinander angeordnete Geräteträger niederschlagen.

Durch weitere Merkmale kann erreicht werden, daß die Verteilungsbaugruppe trotz einer lediglich der Grundfläche des Einschubfaches entsprechenden Größe auch eine nur geringe Dicke aufweist und damit die Höhe der Einschubfächer keiner nennenswerten Vergrößerung bedarf. Dies kann dadurch erreicht werden, daß
- die Verteilungsschienen - in der Tiefenerstreckung des Gerüstes betrachtet - im hinteren Bereich des Gehäuses angeordnet sind,
- die Haupttrennkontakte und die Hilfstrennkontakte vor den Verteilungsschienen angeordnet sind,
- die Verteilungsschienen ein flaches Rechteckprofil aufweisen und etwa in halber Höhe des Gehäuses derart angeordnet sind, daß oberhalb der Verteilungsschienen und unterhalb derselben je ein Raum für die Vebindungsleiter gebildet ist.

Wie bereits erwähnt, besitzen die Geräteträger sowohl Haupttrennkontakte als auch Hilfstrennkontakte. Nach einer weiteren Ausgestaltung der Erfindung können die einem Geräteträger zugeordneten Haupttrennkontakte und Hilfstrennkontakte zu einem ortsfesten, mit dem Gehäuse der Verteilungsbaugruppe verbindbaren Trennkontaktblock zusammengefaßt sein. Dies erleichtert es, die hohen Anforderungen an das maßgenaue Zusammenwirken der bewegbaren und ortsfesten Teile der Trennkontaktanordnungen zu erfüllen.

Der Vielfachanschlußblock kann Fußelemente besitzen, die rastend in ein an der Stützwand angebrachtes Trägerprofil einsteckbar sind. Dies gibt die Möglichkeit, die häufig sehr zahlreichen Hilfsleitungen bereits bei dem Zusammenbau der Verteilungsbaugruppe mit dem Vielfachanschlußblock zu verbinden und dann diesen im Zuge der Montage der Verteilungsbaugruppe an dem Trägerprofil zu befestigen.

Die Verteilungsbaugruppen bedürfen einer Verbindung mit den Feldsammelschienen. Diese Verbindung kann so gestaltet sein, daß sich die Verteilungsbaugruppe an die Feldsammelschienen nach Art einer Steckverbindung anschließen läßt. Dies läßt sich dadurch erreichen, daß die Feldsammelschienen ein U-förmiges Profil aufweisen, wobei die Schenkel der Feldsammelschienen der Verteilungsbaugruppe zugewandt sind, daß die Kontaktenden der Verteilungsschienen durch einen Einschnitt in zwei Kontaktfinger geteilt und daß zwischen den Kontaktfingern wenigstens ein die Kontaktfinger spreizendes Federelement angeordnet ist.

Im Zusammenhang mit einer steckbaren Anschlußverbindung der vorstehend erläuterten Art ist es vorteilhaft, wenn nicht nur die elektrische, sondern auch die mechanische Verbindung der Verteilungsbaugruppe möglichst einfach zu handhaben ist. Hierzu kann dadurch beigetragen werden, daß jeder Fachboden an seiner Unterseite wenigstens einen Haltesteg besitzt und daß das Gehäuse der Verteilungsbaugruppe mit wenigstens einer Rastnase zum Hintergreifen des Haltesteges versehen ist. Mit Rücksicht auf die Gewichtsverteilung empfiehlt es sich, daß zwei Zapfen mit gegenseitigem Abstand etwa im Verlauf einer Linie angeordnet sind, die parallel zu der mit den Kontaktenden der Verteilungsschienen versehenen Seite der Verteilungsbaugruppe und nahe der gegenüberliegenden, dem Raum für Kabel und Leitungen zugewandten Seite der Verteilungsbaugruppe verläuft.

Wegen der Vielzahl zu den Verbrauchern führender Kabel und Leitungen und der zu- und abführenden Hilfsleitungen ist es erwünscht, auch den Anschluß dieser Verbindungen an gut zugänglicher Stelle und einfach vornehmen zu können. In dieser Hinsicht wirkt es sich günstig aus, wenn an der dem Einschubfach zugewandten Seite des Raumes für Kabel und Leitungen eine Stützwand zur Befestigung einer die Anschlußklemmen enthaltenden Klemmleiste für die zu den Verbrauchern führenden Kabel und Leitungen und für wenigstens einen Vielfachanschlußblock für Hilfsleitungen angeordnet ist.

Wie bereits erwähnt, kann die Verteilungsbaugruppe durch eine Rastvorrichtung an der Unterseite eines Fachbodens befestigt werden. Besonders in Verbindung hiermit erweist es sich als zweckmäßig, wenn das Gehäuse der Verteilungsbaugruppe einen Bodenteil und einen mit diesem rastend verbindbaren Deckelteil besitzt, wobei der Bodenteil die Rastnasen sowie in der Tiefenerstreckung des Gerüstes verlaufend angeordnete Nuten zum Einschieben von Trennwänden zur Unterteilung eines Einschubfaches in wenigstens zwei nebeneinander befindliche Aufnahmeplätze für Geräteträger besitzt. Es können also nach Bedarf Trennwände eingesetzt und dadurch Plätze für Geräteträger eingerichtet werden.

Zwischen dem Bodenteil und dem Deckelteil des Gehäuses wird ein Raum für alle zuführenden und abführenden Leitungen der Verteilungsbaugruppe gebildet. Durch eine geeignete Gestaltung kann dafür gesorgt sein, daß die Bestückung mit den Schienen und Leitungen einfach vorzunehmen ist. Hierzu kann der Bodenteil des Gehäuses der Verteilungsbaugruppe Stützböcke für eine etwa mittige Positionierung der Verteilungsschienen in der Höhe des Gehäuses und Zwischenwände zur Bildung von Leitungskanälen aufweisen, wobei im Bereich der Verteilungsschienen ein oberer und ein unterer Leitungsraum gebildet ist.

Die einzelnen Gruppen von Haupttrennkontakten innerhalb einer Verteilungsbaugruppe können mit den Verteilungsschienen ebenfalls mit Schienenstücken verbunden sein. Günstiger ist es jedoch nach einer Weiterbildung der Erfindung, wenn als Verbindungsleiter zwischen den Verteilungsschienen und den ortsfesten Haupttrennkontakten biegsame isolierte Leiter dienen, die an ihrem einen Ende mit den Verteilungsschienen verschweißt und an ihrem anderen Ende mit einem in den Trennkontaktblock einsetzbaren Trennkontaktstück versehen sind.

Die Verteilungsbaugruppe umschließt berührungssicher alle erwähnten Leiter, die mit den einschiebbaren Geräteträgern in Verbindung stehen. Die gleiche Berührungssicherheit kann auch bis zu den Feldsammelschienen dadurch aufrechterhalten werden, daß die Feldsammelschienen in einem isolierenden Sammelschienengehäuse angeordnet sind, das Durchtrittsöffnungen für die Kontaktenden der Verteilungsschienen der Verteilungsbaugruppen besitzt.

Wie schon erwähnt, kann die Befestigung der Verteilungsbaugruppe an einem oberen Fachboden durch Rastzapfen erleichtert werden. Zusätzlich kann das Gehäuse der Verteilungsbaugruppe zwei Zentrierzapfen und der zugehörige Fachboden zwei den Zentrierzapfen angepaßte und zur Aufnahme eines Überstandes der Zentrierzapfen dienende Öffnungen besitzen, wobei die Zentrierzapfen mit gegenseitigem Abstand etwa entlang einer in der Tiefenerstreckung der Verteilungsbaugruppe verlaufenden Mittellinie angeordnet sind. Dies hat den Vorteil, daß einerseits die für die Funktion der Verteilungsbaugruppe erwünschte genaue Ausrichtung in einem Einschubfach zuverlässig erreicht wird und zugleich die zum Abfangen des Gewichtes der Verteilungsbaugruppe bei der Montage vorgesehenen Rastzungen eine günstige Position erhalten können. Ferner können beide Elemente - Rastzungen und Zentrierzapfen - so gestaltet werden, daß nur der jeweilige Zweck optimal erfüllt wird, d. h. eine gute Kraftübertragung bei grober Maßtoleranz und eine gute Zentrierung bei möglichst einfacher Form ohne Rücksicht auf eine Kraftübertragung.

Die Erfindung wird im folgenden anhand des in den Figuren dargestellten Ausführungsbeispieles näher erläutert.

Die Figur 1 zeigt in perspektivischer Darstellung ein Feld einer Niederspannungs-Schaltanlage, das Einschubfächer für Geräteträger unterschiedlicher Größe besitzt.

Die Figur 2 zeigt einen Schnitt durch das Feld gemäß der Figur 1 im Bereich eines mit einer Verteilungsbaugruppe ausgerüsteten Einschubfaches.

In den Figuren 3 und 4 ist die in der Figur 2 erkennbare Verteilungsbaugruppe jeweils in vereinfachter Darstellung in einem frontalen Schnitt bzw. einem Seitenschnitt gezeigt.

Die Figur 5 zeigt den linken Bereich der Verteilungsbaugruppe zur Darstellung eines Kontaktendes einer Verteilungsschiene im Schnitt, wobei ein gegenüber den Figuren 2, 3 und 4 größerer Maßstab gewählt ist.

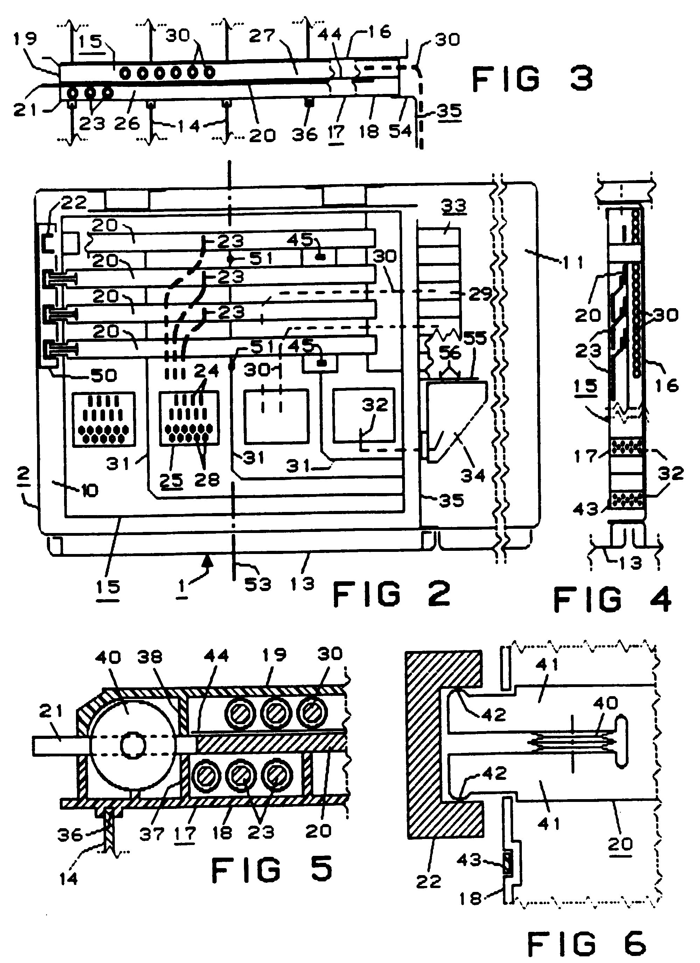

Gleichfalls vergrößert zeigt die Figur 6 das Kontaktende der Verteilungsschiene in der Draufsicht.

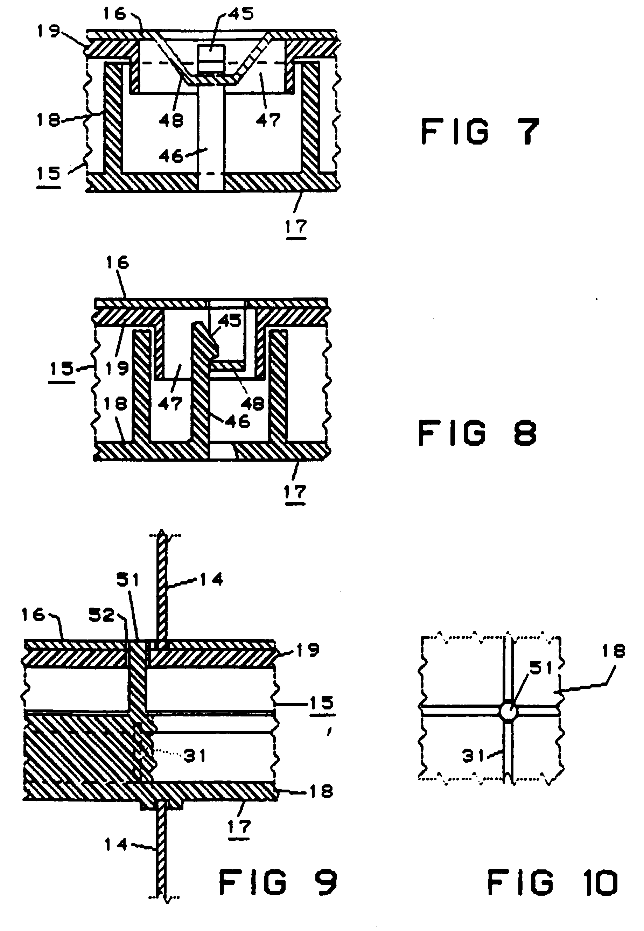

Die Figuren 7 und 8 veranschaulichen eine Rastverbindung zwischen der Verteilungsbaugruppe und einem Fachboden in zwei rechtwinklig zueinander stehenden Schnitten durch die Verteilungsbaugruppe und den Fachboden.

Die Figur 9 zeigt einen Schnitt durch die Verteilungsbaugruppe im Bereich eines Zentrierzapfens.

Gleichfalls im Bereich des Zentrierzapfens gemäß der Figur 9 zeigt die Figur 10 eine Draufsicht auf das Bodenteil des Gehäuses der Verteilungsbaugruppe.

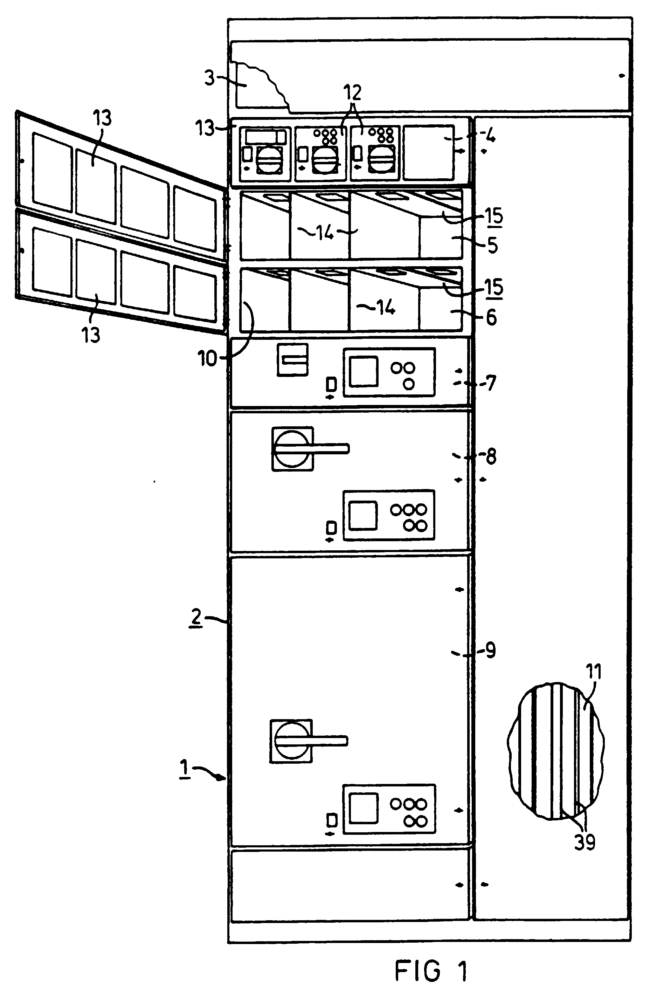

Das in der Figur 1 gezeigte Feld 1 einer Niederspannungs-Schaltanlage weist in bekannter Weise ein aus Stahlblechteilen bestehendes schrankartiges Gerüst 2 auf. Im oberen Bereich - in der Figur 1 durch eine Abdeckung verschlossen - ist ein Sammelschienenraum 3 für Sammelschienen vorgesehen, die sich durch mehrere nebeneinander aufgestellte Felder 1 erstrecken können. An der linken Seite des Feldes 1 befindet sich ein gerüsthoher Raum 10 für mit den einspeisenden Sammelschienen verbundene Feldsammelschienen 22 (Figuren 2 und 6), an die ihrerseits die in Einschubfächern untergebrachten Geräteträger anzuschließen sind. Es sind insgesamt sechs Einschubfächer 4, 5, 6, 7, 8 und 9 gezeigt, von denen die drei oberen Einschubfächer 4, 5 und 6 für sogenannte Kleineinschübe eingerichtet sind (d. h. Geräteträger, die nur einen Teil der Breite des Einschubfaches einnehmen), während das darunter anschießende Einschubfach 7 für einen Volleinschub bestimmt ist (d. h. einen Geräteträger mit der Breite des gesamten Einschubfaches), der jedoch ebenfalls die Höhe der Kleineinschübe besitzt. Die nach unten folgenden Einschubfächer 8 und 9 nehmen gleichfalls Geräteträger mit einer den Einschubfächern entsprechenden Breite auf, besitzen jedoch die doppelte bzw. vierfache Höhe eines der Einschubfächer 4 bis 7. Dementsprechend sind die Einschubfächer 7, 8 und 9 für umfassendere Gerätekombinationen oder große Schaltgeräte, wie Leistungsschalter, bestimmt. Rechts von den erläuterten Einschubfächern befindet sich ein ebenfalls gerüsthoher Raum 11 zur Aufnahme zu den Verbrauchern führenden Kabel und Leitungen und sämtlicher Hilfsleitungen, die zu den Geräteträgern und von diesen zu anderen Stellen der Schaltanlage führen. Mit 39 sind einige solcher Leitungen bezeichnet, die in einem aufgebrochen dargestellten Bereich einer Abdeckung des Raumes 11 sichtbar sind.

Das in der Figur 1 gezeigte oberste Einschubfach 4 enthält drei schmale Geräteträger 12, die durch eine gemeinsame Tür 13 abgedeckt sind. Entsprechende Türen 13 der Einschubfächer 5 und 6 sind geöffnet gezeigt, um den durch Zwischenwände 14 unterteilten Raum zu zeigen. Zu jedem der Einschubfächer 4, 5 und 6 gehört eine Verteilungsbaugruppe 15, die ortsfeste Trennkontakte für alle zu einem Geräteträger und davon wegführende Leitungen besitzt. Die Verteilungsbaugruppen 15 sind jeweils an einem Fachboden 16 des darüberliegenden Einschubfaches befestigt, wie noch erläutert wird. Zunächst seien die Figuren 2, 3 und 4 betrachtet, in denen die Verteilungsbaugruppe 15 schematisch vereinfacht, jedoch mit erkennbaren wesentlichen Merkmalen gezeigt sind. Mit Rücksicht auf die notwenige Verkleinerung der Ansichten sind geschnittene Bauteile nur in einfacher Strichstärke dargestellt.

In der Figur 2 ist ein horizontaler Schnitt durch das Feld 1 gemäß der Figur 1 in der Höhe einer der Verteilungsbaugruppen 15 gezeigt, wobei der Fachboden 16 und ein Deckel der Verteilungsbaugruppe 15 entfernt sind. In den Figuren 3 und 4 ist ein zugehöriger Fachboden 16 sichtbar. Der rechts gelegene Raum 11 für Kabel und Leitungen ist in der Figur 2 durch eine Bruchlinie verkürzt gezeigt.

Bei einem Vergleich der Figuren 2, 3 und 4 ist zunächst ersichtlich, daß die Verteilungsbaugruppe 15 eine ebene und rechtwinklige Grundform sowie eine verhältnismäßig geringe Dicke aufweist. Die Verteilungsbaugruppe 15 weist ein Gehäuse 17 auf, das aus einem Bodenteil 18 und einem Deckel 19 besteht, die beide aus einem elektrisch isolierenden Kunststoff hergestellt sind und durch angeformte Haltezungen 43 (Figuren 4 und 6) verbindbar sind. Etwa in einer mittleren Ebene zwischen dem Bodenteil 18 und dem Deckel 19 sind parallel zueinander flache Verteilungsschienen 20 angeordnet, die an der linken Seite (Figuren 2 und 3) jeweils ein Kontaktende 21 aufweisen. Diese Kontaktenden 21 stehen gemäß der Figur 2 im Eingriff mit im Querschnitt U-förmigen Feldsammelschienen 22, deren offene Seite der Verteilungsbaugruppe 15 zugewandt ist. Die Feldsammelschienen 22 sind ebenso wie die Verteilungsschienen 20 in der Tiefenerstreckung des Gerüstes 2 hintereinanderliegend angeordnet. Die Verteilungsschienen 20 erstrecken sich fast über die gesamte Breite der Verteilungsbaugruppe 15 und nehmen den hinteren Teil der Verteilungsbaugruppe 15 ein. An den Verteilungsschienen 20 sind biegsame isolierte Leiter 23 angebracht, deren Enden mit je einem Haupttrennkontakt 24 versehen sind. Zur Verbindung der biegsamen Leiter 23 und der Verteilungsschienen 20 wird zweckmäßgerweise ein Schweißverfahren eingesetzt, weil solche Verbindungen bei geringem Raumbedarf elektrisch hochwertig und mechanisch belastbar sind. Die einem der Geräteträger 12 zugeordneten Haupttrennkontakte 24 sind in einen Trennkontaktblock 25 eingesetzt, der am Bodenteil 17 der Verteilungsbaugruppe 15 zugänglich ist und daher mit nach oben bewegbaren Gegenkontakten eines Geräteträgers 12 zusammenwirken kann.

Wie die Figur 1 in Verbindung mit der Figur 2 zeigt, sind nebeneinander vier Trennkontaktblöcke 25 in der Verteilungsbaugruppe 15 untergebracht. Jeder Trennkontaktblock 25 enthält neben den Haupttrennkontakten 24 für die Energieleitungen (einspeisende biegsame Leitungen 23 und abgehende Leitungen 30) auch Hilfstrennkontakte 28, über die alle Steuer- und Meldeleitungen zu einem Geräteträger 12 geführt werden. Es hängt von der beabsichtigten Ausrüstung der Schaltanlage 1 ab, ob alle Trennkontaktblöcke 25 eingesetzt werden oder in welcher Verteilung dies geschieht. Es empfiehlt sich jedoch, im Bodenteil 18 des Gehäuses 17 Aufnahmeöffnungen für die Höchstzahl von Trennkontaktblöcken vorzusehen. In bekannter Weise können die Aufnahmeöffnungen im Ausgangszustand des Bodenteiles 18 durch dünne ausbrechbare Wandteile verschlossen sein.

Anhand der Figur 3 wurde schon erwähnt, daß die Verteilungsschienen 20 etwa in einer mittleren Ebene der Verteilungsbaugruppe 15 angeordnet sind. Hierdurch entsteht oberhalb und unterhalb der Verteilungsschienen 20 je ein Raum zur Verlegung von Leitungen. Ein besonders in den Figuren 3 und 4 sichtbarer Leitungsraum 26 ist den biegsamen Leitern 23 vorbehalten. Ein darüber befindlicher Leitungsraum 27 nimmt von den Trennkontaktblöcken 25 kommende Abgangsleitungen 30 auf. Zwischenwände 31 unterteilen die Gesamtfläche der Verteilungsbaugruppe 15 in Leitungskanäle. Diese verlaufen im Bereich zwischen den Trennkontaktblöcken 25 und der Vorderkante der Verteilungsbaugruppe 15 parallel zur Vorderkante, wodurch ein von den Energieleitungen (biegsame Leiter 23 und abgehende Leiter 30) gesonderter Bereich für Hilfsleitungen 32 geschaffen ist. Da die Unterteilung in die Leitungsräume 26 und 27 nur im hinteren Teil des Gehäuses 17 besteht, können im vorderen Teil des Gehäuses 17 die Hilfsleitungen 32 die gesamte Höhe des Gehäuses 17 einnehmen. Dies ist in der Figur 4 unterhalb einer Bruchlinie gezeigt, die einen Wechsel der Schnittebene andeutet. Zum Abschluß aller abgehenden Leitungen 30 befinden sich in dem Raum 10 des Feldes 1 (Figuren 1 und 2) Anschlußklemmen 29, die Bestandteil einer Klemmleiste 33 (Schaltanlagenreihenklemme) sind. Ferner ist für Hilfsleitungen 32 ein Vielfachanschlußblock 34 vorgesehen. Eine Stützwand 35 trägt sowohl die Klemmleiste 33 als auch den Vielfachanschlußblock 34. Die Stützwand 35 bildet zugleich eine teilweise Abtrennung zwischen dem Raum 11 und dem von dem Fachboden 16 gebildeten Aufnahmeplatz für Geräteträger. An der Stützwand 35 ist ein Trägerprofil 55 für Fußelemente 56 des Vielfachanschlußblockes 34 angebracht. Dieser kann daher nach seiner Verbindung mit allen Hilfsleitungen 32 während der Fertigung der Verteilungsbaugruppe 15 und nach der Montage der Verteilungsbaugruppe 15 in einem Einschubfach an der Stützwand 35 bzw. an dem daran angebrachten Trägerprofil 55 mittels der Fußelemente 56 befestigt werden. Dieser Aufnahmeplatz läßt sich durch die schon erwähnten Trennwände 14 entsprechend der Anzahl zu benutzender Geräteträger, höchstens vier in dem gezeigten Beispiel, unterteilen. Zum Einschieben der Trennwände 14 sind an dem Bodenteil 18 der Verteilungsbaugruppe 15 Nuten 16 angeordnet. An ihrer Unterkante können die Trennwände 14 mit einzelnen Zapfen oder Fahnen in passend angeordnete Vertiefungen oder Löcher der Fachböden 16 eingreifen.

Einige der schon erläuterten Merkmale und weitere Einzelheiten sind auch aus den Figuren 5 und 6 ersichtlich, die den Endbereich der Verteilungsbaugruppe 15 mit einem Kontaktende 21 einer der Verteilungsschienen 20 zeigen. Die Verteilungsschiene 20 wird in dem Gehäuse 17 der Verteilungsbaugruppe 15 durch an dem Bodenteil 18 angeformte Stützböcke 37 und weitere Stützböcke 38 gehalten, die sich am Deckel 19 befinden. Nach dem linken Ende des Gehäuses 17 wird durch die Stützböcke 37 und 38 eine Kammer zur Aufnahme von Tellerfedern 40 gebildet, die sich zwischen zwei durch einen Einschnitt am Ende der Verteilungsschiene 20 gebildeten Kontaktfingern 41 befinden, wie näher der Figur 6 zu entnehmen ist. Unter der Kraft der Eigenfederung der Kontaktfinger 41 und der zusätzlichen Tellerfedern 40 liegen ballige Kontaktflächen 42 an der Innenseite der U-förmigen Feldsammelschiene 22 an, wodurch für einen verlustarmen Stromübergang gesorgt ist. In der Figur 6 ist auch eine am Deckel 19 befindliche Haltezunge 43 gezeigt, die zusammen mit weiteren Haltezungen als Rastverbindung zwischen dem Bodenteil 18 und dem Deckel 19 vorgesehen ist. Als weitere Einzelheit zeigt die Figur 5 eine Isolierfolie 44, die als zusätzliche elektrische Isolation zwischen den Verteilungsschienen 20 und den örtlich aufliegenden abgehenden Leitungen 30 dient.

Um die Montage der Verteilungsbaugruppe 15 zu erleichtern, sind an dem Bodenteil 18 des Gehäuses 17 zwei Rastnasen 45 angeformt, die jeweils am Ende eines Rastarmes 46 sitzen. Die Rastnasen 45 erstrecken sich durch eine Deckelöffnung 47 in Richtung des Fachbodens 16, in den eine Senkprägung eingeformt ist, die einen Haltesteg 48 für die Rastnase 45 bildet. Die Rastnasen 45 sind auch in der Figur 2 schematisch angedeutet. Wie man erkennt, sind die beiden Rastnasen 45 auf einer Linie angeordnet, die etwa parallel zu den Seitenkanten der Verteilungsbaugruppe 15 und damit quer zu den Verteilungsschienen 20 verläuft, und zwar relativ nahe der rechten, der Stützwand 35 zugewandten Seitenkante. Dadurch wird eine sehr einfache Montageweise der fertiggestellten Verteilungsbaugruppe 15 ermöglicht. Zuerst wird die Verteilungsbaugruppe 15 in etwa diagonaler Stellung in das ausgewählte Einschubfach eingeführt und dann mit den Kontaktenden 21 in Eingriff mit den Feldsammelschienen 22 gebracht. Hierzu sind passende Einstecköffnungen in einem in der Figur 2 angedeuteten Sammelschienengehäuse 50 angebracht. Damit ist die Verteilungsbaugruppe 15 links um die Kontaktenden 21 schwenkbar. Wird die Verteilungsbaugruppe 15 nun rechts angehoben, so gelangen die Rastnasen 45 in Eingriff mit den Haltestegen 48, wie dies die Figuren 7 und 8 zeigen. Zur genaueren Positionierung der Verteilungsbaugruppe 15 in einem der Einschubfächer 4, 5 oder 6 (Figur 1) sind an dem Gehäuse 17 Zentrierzapfen 51 (Figur 2, 9 und 10) vorgesehen. Wie näher den Figuren 9 und 10 zu entnehmen ist, sind die Zentrierzapfen 51 an das Bodenteil 18 im Bereich einer der Trennwände 31 angeformt und so bemessen, daß sie eine Öffnung im Deckel 19 mit einem Überstand durchgreifen, der etwa der Dicke des Fachbodens 16 entspricht. Der Fachboden 16 ist mit entsprechenden Löchern 51 versehen.

Die Lage der Zentrierzapfen 51 an dem Gehäuse 17 der Verteilungsbaugruppe 15 ist näher in der Figur 2 gezeigt. Wie man erkennt, liegen die Zentrierzapfen auf der mittleren der Trennwände 31, was auch etwa einer Mittellinie 53 des Gehäuses 17 entspricht, und zwar bezogen auf die Räume 10 und 11. Auch ist für einen gewissen gegenseitigen Abstand der Zentrierzapfen 51 gesorgt, der etwa der Tiefenerstreckung der insgesamt vier Verteilungsschienen 20 (Figur 2) entspricht. Durch die beiden Zentrierzapfen 51 und ihre Anordnung wird erreicht, daß bei der beschriebenen Montage der Verteilungsbaugruppe 15 die Zentrierzapfen 51 in die Löcher 51 des Fachbodens 16 eintreten und die Verteilungsbaugruppe gegenüber dem Gerüst 2 genau ausrichten, bevor die Rastzungen 45 hinter die Haltestege 48 greifen (Figuren 7 und 8). Die Funktionen "Zentrieren der Verteilungsbaugruppe 15 im Einschubfach" und "Abfangen des Gewichtes der Verteilungsbaugruppe 15" sind daher gesonderten und der jeweiligen Aufgabe speziell angepaßten Bauteilen übertragen.

Die dauerhafte Unterstützung der Verteilungsbaugruppe 15 übernimmt zusätzlich zu den in die Nuten 36 einschiebenden Trennwänden 14 (Figuren 1 und 3) die Stützwand 35, die gemäß der Figur 3 mit einer Abwinklung 53 unter das Gehäuse 17 greift. Durch einen geeigneten Biegeradius der Abwinklung 53 ist dafür gesorgt, daß die abgehenden Leiter 30 ohne Beschädigung ihrer Isolation zu den Anschlußklemmen 29 geführt werden können.

## Patentansprüche

1. Niederspannungs-Schaltanlage mit Einschubfächern (4, 5, 6) für einschiebbare Geräteträger (12), mit folgenden Merkmalen:
- ein Gerüst (2) mit Feldsammelschienen (22) und mit einem - bei frontseitiger Betrachtung - rechts gelegenen, abgehende Kabel und Leitungen (39) aufnehmenden Raum (11),
- zur Bildung der Einschubfächer (4, 5, 6) in dem Gerüst (2) abgestützte Fachböden (16),
- Verteilungsbaugruppen (15) zur Verbindung der Feldsammelschienen (22) mit wenigstens zwei nebeneinander in einem Einschubfach (4, 5, 6) einzusetzenden Geräteträgern (12) und zur Verbindung der Geräteträger (12) mit abgehenden Leitungen und Kabeln (39),
- ein jeder Verteilungsbaugruppe (15) zugeordnetes Gehäuse (17) weist in dem Gehäuse (17) gegeneinander isoliert abgestützte Verteilungsschienen (20) und ortsfeste Haupttrennkontakte (24) sowie ortsfeste Hilfstrennkontakte (28) auf, ferner abgehende Leitungen (30) sowie Hilfsleitungen (32) zur zur Verbindung der Haupttrennkontakte (24) und/oder der Hilfstrennkontakte (28) mit Anschlußklemmen (29),
**gekennzeichnet durch** folgende weitere Merkmale:
- die Feldsammelschienen (22) sind in einem an der linken Seite des Gerüstes (2) gelegenen gerüsthohen Raum in der Tiefenerstreckung des Gerüstes (2) hintereinanderliegend angeordnet,
- das Gehäuse (17) der Verteilungsbaugruppe (15) ist etwa entsprechend der Grundfläche der Fachböden (16) bemessen,
- die Verteilungsschienen (20) sind in der Tiefenerstreckung des Gerüstes (2) hintereinanderliegend angeordnet,
- an der den Feldsammelschienen (22) zugewandten Seite der Verteilungsbaugruppe (15) sind die Verteilungsschienen (20) mit aus dem Gehäuse (17) herausragenden Kontaktenden (21) versehen,
- die Kontaktenden (21) besitzen mit den Feldsammelschienen (22) zusammenwirkende Kontaktflächen (42) und
- Anschlußklemmen (29) für die zu den Verbrauchern führenden Kabel und Leitungen (39) sind an der den Kontaktenden (21) der Verteilungsschienen (20) gegenüberliegenden Seite der Verteilungsbaugruppe (15) im Gerüst (2) ortsfest angeordnet.

2. Schaltanlage nach Anspruch 1,
**gekennzeichnet durch** folgende Merkmale:
- die Verteilungsschienen (20) sind - in der Tiefenerstreckung des Gerüstes (2) betrachtet - im hinteren Bereich des Gehäuses (17) angeordnet,
- die Haupttrennkontakte (24) und die Hilfstrennkontakte (28) sind vor den Verteilungsschienen (20) angeordnet,
- die Verteilungsschienen (20) besitzen ein flaches Rechteckprofil und sind etwa in halber Höhe des Gehäuses (17) derart angeordnet, daß oberhalb der Verteilungsschienen (20) und unterhalb derselben je ein Leitungsraum (26, 27) für die Verbindungsleiter (23, 30, 32) gebildet ist.

3. Schaltanlage nach Anspruch 2,
**dadurch gekennzeichnet,** daß die einem Geräteträger (12) zugeordneten Haupttrennkontakte (24) und Hilfstrennkontakte (28) zu einem ortsfesten, mit dem Gehäuse (17) der Verteilungsbaugruppe (15) verbindbaren Trennkontaktblock (25) zusammengefaßt sind.

4. Schaltanlage nach Anspruch 1,
**dadurch gekennzeichnet,** daß die Feldsammelschienen (22) ein U-förmiges Profil aufweisen, wobei die offene Seite der Feldsammelschienen (22) der Verteilungsbaugruppe (15) zugewandt ist, daß die Kontaktenden (21) der Verteilungsschienen (20) durch einen Einschnitt in zwei Kontaktfinger (41) geteilt sind und daß zwischen den Kontaktfingern (41) wenigstens ein die Kontaktfinger (41) spreizendes Federelement (40) angeordnet ist.

5. Schaltanlage nach einem der vorangehenden Ansprüche,
**dadurch gekennzeichnet,** daß die Fachböden (16) an ihrer Unterseite wenigstens einen Haltesteg (48) besitzen und daß das Gehäuse (17) der Verteilungsbaugruppe (15) mit wenigstens einer Rastnase (45) zum Hintergreifen des Haltesteges (48) versehen ist.

6. Schaltanlage nach Anspruch 5,
**dadurch gekennzeichnet,** daß zwei Rastnasen (45) mit gegenseitigem Abstand etwa im Verlauf einer Linie angeordnet sind, die parallel zu der mit den Kontaktenden (21) der Verteilungsschienen (20) versehenen Seite der Verteilungsbaugruppe (15) und nahe der gegenüberliegenden, dem Raum (11) für Kabel und Leitungen zugewandten Seite der Verteilungsbaugruppe (15) verläuft.

7. Schaltanlage nach Anspruch 4,
**dadurch gekennzeichnet,** daß an der dem Einschubfach (4, 5, 6) zugewandten Seite des Raumes (11) für Kabel und Leitungen (39) eine Stützwand (35) zur Befestigung einer die Anschlußklemmen (29) enthaltenden Klemmleiste (33) für die zu den Verbrauchern führenden Kabel und Leitungen (39) und für wenigstens einen Vielfachanschlußblock (34) für Hilfsleitungen (32) angeordnet ist.

8. Schaltanlage nach Anspruch 7,
**dadurch gekennzeichnet,** daß der Vielfachanschlußblock (34) Fußelemente (56) besitzt, die rastend in ein an der Stützwand (35) angebrachtes Trägerprofil (55) einsteckbar ist.

9. Schaltanlage nach Anspruch 5,
**dadurch gekennzeichnet,** daß das Gehäuse (17) der Verteilungsbaugruppe (15) einen Bodenteil (18) und einen mit diesem rastend verbindbaren Deckel (19) besitzt, wobei der Bodenteil (18) die Rastnase (45) sowie in der Tiefenerstreckung des Gerüstes (2) verlaufend angeordnete Nuten (36) zum Einschieben von Trennwänden (14) zur Unterteilung eines Einschubfaches (4, 5, 6) in wenigstens zwei nebeneinander befindliche Aufnahmeplätze für Geräteträger (12) besitzt.

10. Schaltanlage nach Anspruch 9,
**dadurch gekennzeichnet,** daß der Bodenteil (18) des Gehäuses (17) der Verteilungsbaugruppe (15) Stützböcke (37) für eine etwa mittige Positionierung der Verteilungsschienen (20) in der Höhe des Gehäuses (17) und Zwischenwände (31) zur Bildung von Leitungskanälen aufweist, wobei im Bereich der Verteilungsschienen (20) ein oberer und ein unterer Leitungsraum (26, 27) gebildet ist.

11. Schaltanlage nach Anspruch 3,
**dadurch gekennzeichnet,** daß als Verbindungsleiter (23) zwischen den Verteilungsschienen (20) und den ortsfesten Haupttrennkontakten biegsame isolierte Leiter dienen, die an ihrem einen Ende mit den Verteilungsschienen (20) verschweißt und an ihrem anderen Ende mit dem in einen in das Gehäuse (17) der Verteilungsbaugruppe (15) einfügbaren Trennkontaktblock (25) einsetzbaren Trennkontakt (24) versehen sind.

12. Schaltanlage nach einem der vorangehenden Ansprüche,
**dadurch gekennzeichnet,** daß die Feldsammelschienen (22) in einem isolierenden Sammelschienengehäuse (50) angeordnet ist, das Durchtrittsöffnungen für die Kontaktenden (21) der Verteilungsschienen (20) der Verteilungsgruppen (15) besitzt.

13. Schaltanlage nach Anspruch 5 oder 6,
**dadurch gekennzeichnet,** daß das Gehäuse der Verteilungsbaugruppe (15) zwei Zentrierzapfen (51) und der zugehörige Fachboden (16) zwei den Zentrierzapfen (51) angepaßte und zur Aufnahme eines Überstandes der Zentrierzapfen (51) dienende Öffnungen (52) besitzt, wobei die Zentrierzapfen (51) mit gegenseitigem Abstand etwa entlang einer in der Tiefenerstreckung der Verteilungsbaugruppe (15) verlaufenden Mittellinie (53) angeordnet sind.

## Claims

1. Low-voltage switchgear with push-in compartments (4, 5, 6) for push-in device carriers (12) having the following features:
- a framework (2) with field busbars (22) and with a chamber (11) which is located on the right - as viewed from the front - and holds outgoing leads and cables (39),
- compartment bottoms (16) supported in the framework (2) to form the push-in compartments (4, 5, 6),
- distribution modules (15) for connecting the field busbars (22) to at least two device carriers (12) which are to be inserted next to one another in a push-in compartment (4, 5, 6) and for connecting the device carriers (12) to outgoing leads and cables (39),
- a housing (17) allocated to each distribution module (15) has distribution busbars (20) supported in a mutually insulated manner in the housing (17) and stationary main isolating contacts (24) as well as stationary auxiliary isolating contacts (28), also outgoing cables (30) and auxiliary cables (32) for connecting the main isolating contacts (24) and/or the auxiliary isolating contacts (28) to connecting terminals (29),
characterised by the following further features:
- the field busbars (22) are arranged in succession in a frame-high chamber, located on the left-hand side of the framework (2), in the depth dimension of the framework (2),
- the housing (17) of the distribution module (15) is dimensioned substantially according to the base area of the compartment bottoms (16),
- the distribution busbars (20) are arranged in succession in the depth dimension of the framework (2),
- the distribution busbars (20) are provided with contact ends (21) projecting from the housing (17) on the side of the distribution module (15) facing the field busbars (22),
- the contact ends (21) have contact faces (42) cooperating with the field busbars (22) and
- connecting terminals (29) for the leads and cables (39) leading to the consumers are arranged stationarily in the framework (2) on the side of the distribution module (15) remote from the contact ends (21) of the distribution busbars (20) .

2. Switchgear according to claim 1, characterised by the following features:
- the distribution busbars (20) are arranged in the rear region of the housing (17) - as viewed in the depth dimension of the framework (2),
- the main isolating contacts (24) and the auxiliary isolating contacts (28) are arranged in front of the distribution busbars (20),
- the distribution busbars (20) have a flat rectangular profile and are arranged substantially halfway up the housing (17) such that a respective cable chamber (26, 27) for the connecting conductors (23, 30, 32) is formed above and below the distribution busbars (20).

3. Switchgear according to claim 2, characterised in that the main isolating contacts (24) and auxiliary isolating contacts (28) allocated to a device carrier (12) are combined to form a stationary isolating contact block (25) which can be connected to the housing (17) of the distribution module (15).

4. Switchgear according to claim 1, characterised in that the field busbars (22) have a U-shaped profile, the open side of the field busbars (22) facing the distribution module (15), in that the contact ends (21) of the distribution busbars (20) are divided into two contact fingers (41) by an incision and in that at least one spring element (40) spreading the contact fingers (41) is arranged between the contact fingers (41).

5. Switchgear according to one of the preceding claims, characterised in that the compartment bottoms (16) have at least one holding web (48) on their underside and in that the housing (17) of the distribution module (15) is provided with at least one catch nose (45) for latching behind the holding web (48).

6. Switchgear according to claim 5, characterised in that two catch noses (45) with mutual spacing are arranged substantially in the course of a line extending parallel to the side of the distribution module (15) provided with the contact ends (21) of the distribution busbars (20) and close to the opposing side of the distribution module (15) facing the chamber (11) for leads and cables.

7. Switchgear according to claim 4, characterised in that a supporting wall (35) for fastening a terminal strip (33), containing the connecting terminals (29), for the leads and cables (39) leading to the consumers and for at least one multiple connecting block (34) for auxiliary cables (32) is arranged on the side of the chamber (11) for leads and cables (39) facing the push-in compartment (4, 5, 6).

8. Switchgear according to claim 7, characterised in that the multiple connecting block (34) has feet elements (56) which can be inserted in a catching manner in a carrier profile (55) arranged on the supporting wall (35).

9. Switchgear according to claim 5, characterised in that the housing (17) of the distribution module (15) has a bottom part (18) and a lid (19) catching therewith, the bottom part (18) having the catch nose (45) and grooves (36) arranged so as to extend in the depth dimension of the framework (2) for pushing in dividing walls (14) in order to divide a push-in compartment (4, 5, 6) into at least two adjacent receiving spaces for device carriers (12).

10. Switchgear according to claim 9, characterised in that the bottom part (18) of the housing (17) of the distribution module (15) has supporting blocks (37) for substantially central positioning of the distribution busbars (20) at the level of the housing (17) and partition walls (31) for forming cable ducts, an upper and a lower cable chamber (26, 27) being formed in the region of the distribution busbars (20).

11. Switchgear according to claim 3, characterised in that flexible insulated conductors, which are welded at one end to the distribution busbars (20) and are provided at their other end with the isolating contact (24) which can be inserted into an isolating contact block (25) insertable into the housing (17) of the distribution module (15), serve as connecting conductors (23) between the distribution busbars (20) and the stationary main isolating contacts.

12. Switchgear according to one of the preceding claims, characterised in that the field busbars (22) are arranged in an isolating busbar housing (50) having through-orifices for the contact ends (21) of the distribution busbars (20) of the distribution modules (15).

13. Switchgear according to claim 5 or 6, characterised in that the housing of the distribution module (15) has two centring pins (51) and the associated compartment bottom (16) has two orifices (52) adapted to the centring pins (51) and serving to receive a projection of the centring pins (51), the centring pins (51) being arranged with mutual spacing substantially along a centre line (53) extending in the depth dimension of the distribution module (15).

## Revendications

1. Installation de distribution basse tension comportant des tiroirs débrochables (4, 5, 6) pour des supports d'appareils insérables (12), présentant les particularités suivantes :
- une structure (2) comportant des jeux de barres (22) de panneau et un espace (11) qui - vu en face frontale - est situé à droite et qui est destiné à recevoir des câbles et des lignes de départ (39) ;
- des fonds en treillis (16) supportés dans la structure (2) pour former les tiroirs débrochables (4, 5, 6) ;
- des groupes de distribution (15) pour relier les jeux de barres (22) de panneau à au moins deux supports d'appareils (12) qui sont à monter l'un à côté de l'autre dans un tiroir débrochable (4, 5, 6), et pour relier les supports d'appareils (12) à des lignes et câbles départ (39) ;
- un boîtier (17) associé à chaque groupe de distribution (15) comporte dans le boîtier (17) des barres de distribution (20) supportées, qui sont isolées les unes par rapport aux autres, des contacts principaux fixes de coupure (24) et des contacts auxiliaires fixes de coupure (28), ainsi que des lignes de départ (30) et des lignes auxiliaires (32) destinées à relier les contacts principaux de coupure (24) et/ou les contacts auxiliaires de coupure (28) à des bornes de raccordement (29) ;
caractérisée par les autres particularités suivantes :
- les jeux de barres (22) de panneau sont diposés les uns derrière les autres dans l'extension en profondeur d'un espace de même hauteur que la structure (2), qui est situé sur le côté gauche de la structure (2) ;
- le boîtier (17) du groupe de distribution (15) est dimensionné afin de correspondre sensiblement à la surface de base des fonds en treillis (16) ;
- les barres de distribution (20) sont disposées les unes derrière les autres dans l'extension en profondeur de la structure (2) ;
- du côté du groupe de distribution (15) orienté vers les jeux de barres (22) de panneau, les barres de distribution (20) sont munies d'extrémités de contact (21) qui sortent du boîtier (17) ;
- les extrémités de contact (21) comportent des surfaces de contact (42) qui agissent conjointement avec les jeux de barres (22) de panneau ; et
- les bornes de raccordement (29) pour les câbles et lignes (39) conduisant aux consommateurs sont disposées à demeure du côté du groupe de distribution (15) dans la structure (2) qui est opposé aux extrémités de contact (21) des barres de distribution (20).

2. Installation de distribution selon la revendication 1,
caractérisée par les particularités suivantes :
- les barres de distribution (20) - vues dans l'extension en profondeur de la structure (2) - sont disposées dans la partie arrière du boîtier (17) ;
- les contacts principaux de coupure (24) et les contacts auxiliaires de coupure (28) sont disposés devant les barres de distribution (20) ;
- les barres de distribution (20) ont un profil rectangulaire plat et sont disposées à peu près à mi-hauteur du boîtier (17) de telle sorte que, au-dessus et au-dessous des barres de distribution (20), un espace (26, 27) pour les conducteurs de liaison (23, 30, 32) soit formé.

3. Installation de distribution selon la revendication 2,
caractérisée par le fait que les contacts principaux de coupure (24) et les contacts auxiliaires de coupure (28) associés à un support d'appareil (12) sont regroupés en un bloc (25) de contacts de coupure disposé à demeure pouvant être relié au boîtier (17) du groupe de distribution (15).

4. Installation de distribution selon la revendication 1,
caractérisée par le fait que les jeux de barres (22) de panneau ont un profil en forme de U, les côtés ouverts des jeux de barres (22) de panneau étant orientés vers le groupe de distribution (15), que les extrémités de contact (21) des barres de distribution (20) sont séparées en deux doigts de contact (41) par une découpe, et qu'au moins un élément à ressort (40) écartant les doigts de contact (41) est disposé entre les doigts de contact (41).

5. Installation de distribution selon l'une quelconque des revendications précédentes,
caractérisée par le fait que les fonds en treillis (16) comportent en leur partie inférieure au moins une barrette de retenue (48), et que le boîtier (17) du groupe de distribution (15) est muni d'au moins un taquet d'encliquetage (45) qui s'accroche derrière la barrette de retenue (48).

6. Installation de distribution selon la revendication 5,
caractérisée par le fait que deux taquets d'encliquetage (45) sont disposés à une distance mutuelle approximativement le long d'une ligne, qui s'étend parallèlement au côté du groupe de distribution (15) muni des extrémités de contact (21) des barres de distribution (20) et à proximité du côté opposé du groupe de distribution (15) orienté en direction de l'espace (11) destiné aux câbles et lignes.

7. Installation de distribution selon la revendication 4,
caractérisée par le fait que du côté de l'espace (11) destiné aux câbles et lignes orientés vers le tiroir débrochable (4, 5, 6), il est prévu une paroi de soutènement (35) pour la fixation d'une réglette à bornes (33) comportant les bornes de raccordement (29) pour les câbles et lignes (39) conduisant aux consommateurs, et pour au moins un bloc de raccordement multiple (34) destiné aux lignes auxiliaires (32).

8. Installation de distribution selon la revendication 7,
caractérisée par le fait que le bloc de raccordement multiple (34) comporte des éléments d'embase (56), qui peuvent être enfichés par encliquetage dans un profilé de support (55) fixé sur la paroi de soutènement (35).

9. Installation de distribution selon la revendication 5,
caractérisée par le fait que le boîtier (17) de groupe de distribution (15) comporte un élément de fond (18) avec un couvercle (19) pouvant être relié à ce dernier par encliquetage, l'élément de fond (18) étant muni du taquet d'encliquetage (45), ainsi que de rainures (36) qui s'étendent dans l'extension en profondeur de la structure (2) pour l'insertion de cloisons (14) destinées à subdiviser un tiroir débrochable (4, 5, 6) en au moins deux emplacements de réception situés côte-à-côte pour supports d'appareils (12).

10. Installation de distribution selon la revendication 9,
caractérisée par le fait que l'élément de fond (18) du boîtier (17) du groupe de distribution (15) comporte des tasseaux (37) destinés à un positionnement sensiblement centré des barres de distribution (20) en partie supérieure du boîtier (17), et des parois de séparation (31) destinées à former des gaines de lignes, un espace supérieur et un espace inférieur (26, 27) de lignes étant formés dans la zone des barres de distribution (20).

11. Installation de distribution selon la revendication 3,
caractérisée par le fait que des conducteurs isolés souples servent de conducteurs de liaison (23) entre les barres de distribution (20) et les contacts principaux fixes de coupure, l'une des extrémités de ces conducteurs étant soudée aux barres de distribution (20), et leur autre extrémité étant munie d'un contact de coupure (24) qui est insérable dans le bloc de contacts de coupure (25) pouvant être monté dans le boîtier (17) du groupe de distribution (15).

12. Installation de distribution selon l'une quelconque des revendications précédentes
caractérisée par le fait que les jeux de barres (22) de panneau sont disposés dans un boîtier isolé (50) de jeux de barres, qui comporte des ouvertures de passage pour les extrémités de contact (21) des barres de distribution (20) des groupes de distribution (15).

13. Installation de distribution selon la revendication 5 ou 6,
caractérisée par le fait que le boîtier du groupe de distribution (15) comporte deux tenons de centrage (51), et le fond en treillis (16) associé deux ouvertures (52) adaptées aux tenons de centrage (51), qui servent à recevoir l'extrémité dépassante des tenons de centrage (51), les tenons de centrage (51) étant disposés à une distance mutuelle approximativement le long d'une ligne médiane (53) qui s'étend dans l'extension en profondeur du groupe de distribution (15).
